# EUROPÄISCHE PATENTSCHRIFT

(11) **EP 0 806 328 B1**
(45) Veröffentlichungstag und Bekanntmachung des Hinweises auf die Patenterteilung: **02.05.2002**
(21) Anmeldenummer: 97104683.4
(22) Anmeldetag: 19.03.1997
(51) Int. Cl.: B60R 25/02

(54) **Kraftfahrzeug-Lenkradschloss**
Motor vehicle steering lock
Verrou de direction de véhicule automobile

(30) Priorität: 12.04.1996 DE 19614436
(43) Veröffentlichungstag der Anmeldung: 12.11.1997
(60) Teilanmeldung: 00203525.1
(73) Patentinhaber: VALEO GmbH & Co Schliesssysteme KG, 42579 Heiligenhaus (DE)
(72) Erfinder: Janz, Manfred, 45127 Essen (DE); Lieb, Kurt, 63500 Seligenstadt (DE); Richter, Martin, 63477 Maintal (DE)
(74) Vertreter: Podszus, Burghart, Dipl.-Phys., Dipl.-Wirtsch.-Ing.

(56) Entgegenhaltungen:
- DE-A- 2 053 775
- DE-A- 2 354 135
- GB-A- 2 037 867
- US-A- 5 186 031

## Beschreibung

Die Erfindung betrifft ein Kraftfahrzeug-Lenkradschloß mit einem Gehäuse und einem von einem Schlüssel betätigbaren Schließzylinder, wobei das Gehäuse eine Montageöffnung besitzt, die durch eine an dem Gehäuse befestigbare Abdeckplatte verdeckt ist.

Als relativ problematisch hat es sich bei dem gattungsgemäßen Lenkradschloß erwiesen, die Abdeckplatte gegen Entfernen durch unbefugte Dritte zu sichern.

Aus der DE 92 08 698 U1 ist bereits ein Kraftfahrzeug-Lenkradschloß bekannt, welches aus einem Gehäuse mit einem Schließzylinder besteht, wobei der Schließzylinder einen Sperrbolzen zum Blockieren der Lenkradsäule betätigt, so daß bei abgezogenem Schlüssel der Sperrbolzen in eine entsprechende Ausnehmung der Lenkradsäule eingreift (Sperrposition). Ferner ist eine Sicherheitseinrichtung mit einem Sperrstift vorgesehen, welcher in der Sperrposition des Sperrbolzens in eine Ausnehmung des Sperrbolzens -oder eines den Sperrbolzen ansteuernden Teiles- eingreift und diesen blockiert, wenn der Schließzylinder oder das den Schließzylinder aufnehmende Gehäuse verwunden wird oder abbricht bzw. wenn das Lenkradschloß entfernt wird (gesicherte Stellung des Sperrbolzens).

Eine mit dem gattungsgemäßen Kraftfahrzeug-Lenkradschloß vergleichbare Montageöffnung mit Abdeckplatte offenbart die DE 92 08 698 U1 nicht. Außerdem ist bei dem bekannten Lenkradschloß u.a. nachteilig, daß es aufwendig aufgebaut ist und aus einer relativ hohen Anzahl von Einzelelementen besteht.

Der Erfindung liegt die Aufgabe zugrunde, ein Kraftfahrzeug-Lenkradschloß mit einer eine Montageöffnung verdeckenden Abdeckplatte anzugeben, welches einfach montierbar und trotzdem gegen Manipulationen durch unbefugte Dritte geschützt ist.

Diese Aufgabe wird erfindungsgemäß durch die Merkmale des Anspruchs 1 gelöst. Weitere besonders vorteilhafte Ausgestaltungen der Erfindung offenbaren die Unteransprüche.

Die Erfindung beruht auf dem Gedanken, die Abdeckplatte mit einer Abkröpfung zu versehen, die eine Ausnehmung aufweist, in der sich ein in Richtung der Längsachse des Schließzylinders erstreckendes Abzugssicherungsblech befindet, welches die Abdeckplatte riegelartig sichert. Hierzu stützt sich das Abzugssicherungsblech einerseits in einer Führungsnut des Gehäuses ab. Andererseits ist das Abzugssicherungsblech derart in der Ausnehmung der Abkröpfung angeordnet, daß es aus dieser Ausnehmung in der montierten Stellung der Abdeckplatte nicht herausgezogen werden kann.

Um zu vermeiden, daß Unbefugte nach dem Abbrechen des Schließzylinders die abgebrochenen Reste herausziehen können, um dann vom Fahrzeuginnenraum aus mit einem stangenförmigen Spezialwerkzeug den Sperrstift aus der entsprechenden Ausnehmung des Sperrgliedes zu ziehen, weist das Abzugssicherungsblech im Bereich der Ausnehmung der Abkröpfung eine nutenförmige Ausnehmung auf, wobei durch die Abdeckplatte eine Hinterschneidung entsteht. Damit das Abzugssicherungsblech außerdem in seiner Längsrichtung etwas verschiebbar ist, ist die Länge der nutenförmigen Ausnehmung größer als die Länge der Ausnehmung der Abkröpfung.

Um ferner zu vermeiden, daß an dem abgebrochenen Ende des Abzugssicherungsbleches im Bereich des Sperrstiftes durch einen Unbefugten versucht werden könnte, durch Verdrehen des Abzugssicherungsbleches dieses aus der Ausnehmung der Abkröpfung zu ziehen, ist die Sollbruchstelle vorzugsweise in der Nähe der Abdeckplatte angeordnet.

Für den Fall, daß ein zusätzlicher Sperrstift zur Sicherung des Sperrbolzens vorgesehen ist, ist dieser im Bereich des zweiten Endes des Abzugssicherungsbleches angeordnet, derart, daß das Ende des Abzugssicherungsbleches in der ungesicherten Stellung des Sperrbolzens den in dem Lenkradschloß-Gehäuse gelagerten und mit Federkraft vorgespannten Sicherungsstift zurückhält. Das Abzugssicherungsblech weist mindestens eine Sollbruchstelle zwischen der Abdeckplatte und der Schließzylindervorderseite auf. Bei Herausreißen oder Abbrechen des Schließzylinders bricht das Ende des Abzugssicherungsbleches ab, gibt den Sicherungsstift frei und sichert den Sperrbolzen. Außerdem wird die Öffnung der Ausnehmung der Abkröpfung zum Sicherungsstift blockiert.

Auch bei einer Manipulation an der Abdeckplatte wird das in der Ausnehmung der Abkröpfung befindliche Abzugssicherungsblech verschoben, was ebenfalls zu einer Freigabe des Sicherungsstiftes und damit zu einer Sicherung des Sperrbolzens führt.

Als vorteilhaft hat es sich erwiesen, den Sperrstift zweiteilig als abgesetzten Zylinder auszubilden. Dabei greift in der gesicherten Stellung des Sperrbolzens der erste Teil des Zylinders mit dem kleineren Durchmesser in die Ausnehmung des Sperrgliedes ein. Der zweite Teil des Zylinders stützt sich in der ungesicherten Stellung des Sperrbolzens an dem zweiten Ende des Abzugssicherungsbleches ab.

Weitere Einzelheiten und Vorteile der Erfindung ergeben sich aus den folgenden anhand von Figuren erläuterten Ausführungsbeispielen. Es zeigen:
- Fig.1: eine perspektivische Ansicht eines ersten erfindungsgemäßen Lenkradschlosses mit einer zusätzlichen Sicherheitseinrichtung, wobei aus Übersichtlichkeitsgründen nicht alle Teile des Schlosses dargestellt sind;
- Fig.2: eine Seitenansicht des in Fig.1 dargestellten Lenkradschlosses;
- Fig.3 und 4: zwei Querschnitte durch das in Fig.2 dargestellte Lenkradschloß entlang der dort mit III-III und IV-IV bezeichneten Schnittlinien;
- Fig.5: die Seitenansicht eines Abzugssicherungsbleches und
- Fig.6 und 7: eine perspektivische Ansicht eines zweiten erfindungsgemäßen Lenkradschlosses ohne zusätzliche Sicherheitseinrichtung vor und nach der Montage der Abdeckplatte.

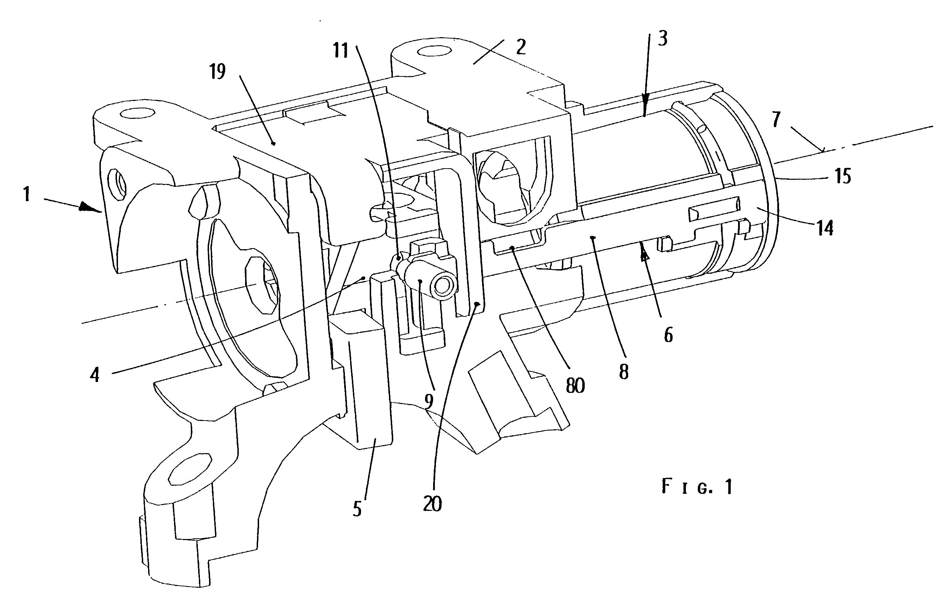

In den Fig.1 und 2 ist mit 1 ein Kraftfahrzeug-Lenkradschloß bezeichnet, welches ein Gehäuse 2 und einen von einem Schlüssel (nicht dargestellt) betätigbaren Schließzylinder 3 umfaßt. Der Schließzylinder 3 ist über einen Mitnehmer 4 mit einem Sperrbolzen 5 verbunden, welcher zum Blockieren einer aus Übersichtlichkeitsgründen nicht dargestellten Lenkradsäule des entsprechenden Fahrzeuges bei abgezogenem Schlüssel in eine entsprechende Ausnehmung der Lenkradsäule eingreift (Sperrposition).

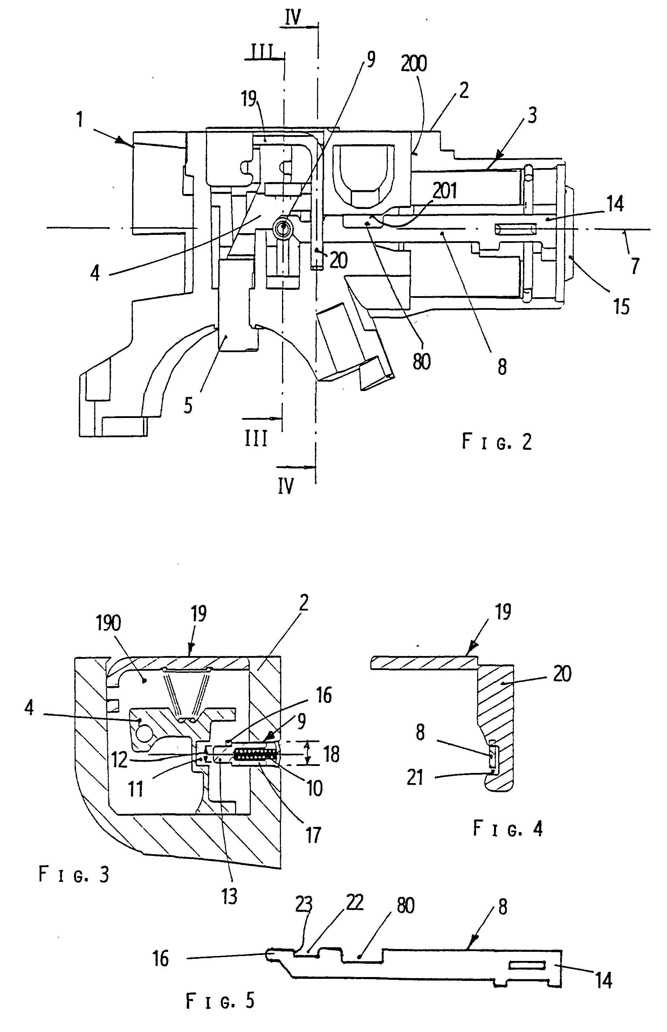

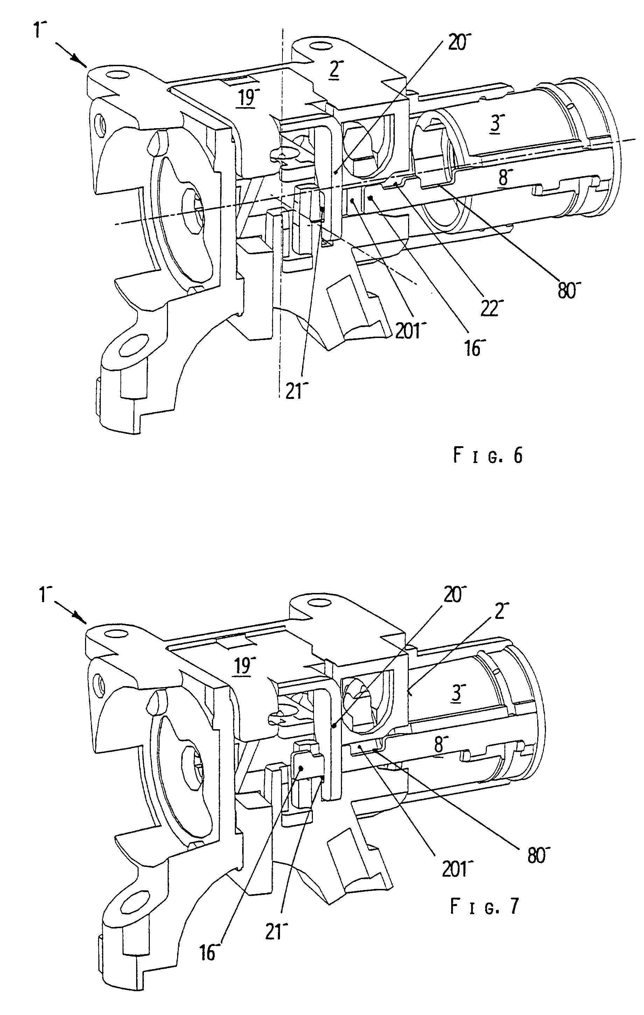

Ferner ist eine Sicherheitseinrichtung 6 vorgesehen, die aus einem sich in Richtung der Längsachse 7 des Schließzylinders 3 erstreckenden stegförmigen Abzugssicherungsblech 8 mit einer Sollbruchstelle 80 und einem zylinderförmigen Sperrstift 9 besteht (Fig.5). Der Sperrstift 9 ist mittels einer Feder 10 (Fig.3) vorgespannt und greift in seiner Sperrstellung in eine Ausnehmung 11 des Mitnehmers 4. Der Sperrstift 9 besitzt die Form eines abgesetzten Zylinders, wobei der erste, den kleineren Durchmesser 12 aufweisende Teil 13 der Ausnehmung 11 des Mitnehmers 4 zugewandt ist.

Während das erste Ende 14 des Abzugssicherungsbleches 8 im Bereich der Schließzylindervorderseite 15 befestigt ist, hintergreift das zweite nasenförmig ausgebildete Ende 16 des Abzugssicherungsbleches 8 den zweiten Teil 17 des Sperrstiftes 9 mit dem größeren Durchmesser 18 und hält den federvorgespannten Sperrstift 9 zurück.

Im Bereich des Mitnehmers 4 weist das Lenkradschloß 1 eine Abdeckplatte 19 zur Abdeckung einer Montageöffnung 190 auf, die eine Abkröpfung 20 mit einer Ausnehmung 21 besitzt (Fig.4). In der Ausnehmung 21 wird das Abzugssicherungsblech 8 geführt. Das Abzugssicherungsblech 8 weist in diesem Bereich eine nutenförmige Ausnehmung 22 auf, die etwas länger gewählt ist als die Länge der Ausnehmung 21 der Abdeck-platte 19. Außerdem ist die Abdeckplatte 19 derart an dem Gehäuse 2 befestigt, daß durch die Seitenwand 23 (Fig.5) der Ausnehmung 22 eine Hinterschneidung entsteht, so daß das Abzugssicherungsblech 8 zwar etwas in Richtung der Längsachse 7 verschoben, nicht aber aus der Ausnehmung 21 herausgezogen werden kann. Das Abzugssicherungsblech 8 stützt sich zwischen der Abkröpfung 20 und dem schließzylinderseitigen Ende 200 des Gehäuses in einer Führungsnut 201 des Gehäuses ab.

Im folgenden wird auf die Wirkungsweise des erfindungsgemäßen Lenkradschlosses 1 näher eingegangen:

Das Lenkradschloß möge sich in der in Fig.1 dargestellten Sperrposition befinden, bei der der Sperrbolzen 5 sich in seiner unteren Position befindet und in eine entsprechende Ausnehmung der nicht dargestellten Lenkradsäule eingreift. Wird nun versucht, durch gewaltsames Verdrehen den Schließzylinder 3 zu zerbrechen, um von der Innenseite des Fahrzeuges an den Sperrbolzen 5 zu gelangen, so wird dabei gleichzeitig das Abzugssicherungsblech 8 im Bereich der Sollbruchstelle 80 zerstört. Das Abzugssicherungsblech 8 verschiebt sich etwas in Richtung auf den abgebrochenen oder verdrehten Schließzylinder 3 und das nasenförmige Ende 16 des Abzugssicherungsbleches 8 gibt den federbelasteten Sperrstift 9 frei, so daß der erste Teil 13 des Sperrstiftes 9 in die Ausnehmung 11 des Mitnehmers 4 eingeschoben und der Sperrbolzen 5 in seiner Sperrposition gesichert wird.

Aufgrund der gewählten Breite der Ausnehmung 21 der Abkröpfung und des Abzugssicherungsbleches 8 im Bereich der Ausnehmung 21 kann der in der Ausnehmung befindliche Teil des Abzugssicherungsbleches 8 nicht aus dieser herausgezogen werden. Dadurch kann ein unbefugter Dritter, etwa mit einem Spezialwerkzeug, nicht durch die Ausnehmung 21 hindurch an den Sperrbolzen 5 gelangen und diesen zurückziehen.

Auch bei einem Versuch, an den Sperrbolzen 5 über die Abdeckplatte 19 zu gelangen, wird durch leichtes Anheben der Abdeckplatte 19 und damit auch der Abkröpfung 20 das Abzugssicherungsblech 8 leicht angehoben und der Sperrstift 9 freigegeben. Der Sperrbolzen 5 wird in seiner Sperrposition auch in diesem Fall durch den Sperrstift 9 gesichert.

Die Erfindung ist selbstverständlich nicht auf das vorstehend beschriebene Ausführungsbeispiel beschränkt. So braucht beispielsweise der Sperrstift nicht als abgesetzter Zylinder ausgestaltet sein. Vielmehr ist lediglich erforderlich, daß der Sperrstift durch ein Sperrglied daran gehindert wird, in der ungesicherten Stellung des Sperrbolzens in die entsprechende Ausnehmung des Sperrbolzens einzudringen.

Um ein Herausziehen des Abzugssicherungsbleches aus der Führungsnut der Abdeckplatte zu verhindern, braucht nicht notwendigerweise -wie in Fig.4 dargestellt- die Mittelachse des Abzugsbleches gegenüber der Mittelachse der Ausnehmung der Abkröpfung verschoben sein, sondern es kann auch die Breite der Ausnehmung, etwa gleich der Breite des Abzugssicherungsbleches im Bereich der nutenförmigen Ausnehmung, gewählt werden.

Die Erfindung bezieht sich auch nicht ausschließlich auf Lenkradschlösser mit zusätzlicher Sicherheitseinrichtung 6. Vielmehr betrifft die Erfindung auch solche Lenkradschlösser, bei denen eine zusätzliche Sicherheitseinrichtung fehlt und bei denen lediglich eine Sicherung der Abdeckplatte gegen unbefugtes Aushebeln und Entfernen der Abdeckplatte erforderlich ist. Ein entsprechendes Lenkradschloß zeigen die Fig.6 und 7, die im wesentlichen dem in Fig.1 dargestellten Ausführungsbeispiel entsprechen:

Mit 1' sind dabei das Lenkradschloß, mit 2' das Gehäuse und mit 3' der Schließzylinder bezeichnet. Eine entsprechende Montageöffnung ist wiederum durch eine Abdeckplatte 19' mit einer Abkröpfung 20' verschlossen. Zur Verriegelung der Abdeckplatte 19' ist ein Abzugssicherungsblech 8' mit einer Ausnehmung 22' und einer Sollbruchstelle 80' durch eine entsprechende Ausnehmung 21' der Abkröpfung 20' geführt. Außerdem stützt sich das Abzugssicherungsblech 8' in einer Führungsnut 201' des Gehäuses 2' ab.

Fig.6 zeigt die etwas angehobene Stellung der Abdeckplatte 19' bei der Montage des Schließzylinders mit Abzugssicherungsblech 8'. In dieser Stellung kann das zweite Ende 16' des Abzugssicherungbleches 8' durch die Ausnehmung 21' der Abkröpfung 20' geschoben werden. Anschließend wird die Abdeckplatte 19' nach unten gedrückt und befestigt (z.B. verstemmt), so daß das Abzugssicherungsblech 8' auch dann nicht aus der Ausnehmung 21' herausgezogen werden kann, wenn es etwa durch gewaltsames Verdrehen des Schließzylinders an der Sollbruchstelle 80' bricht. Eine Demontage des Abzugssicherungsbleches 8' ist -wie die Montage- nur bei definiert angehobener Abdeckplatte möglich.

### Bezugszeichenliste

- 1,1': Kraftfahrzeug-Lenkradschloß, Lenkradschloß
- 2,2': Gehäuse
- 3,3': Schließzylinder
- 4: Mitnehmer, Sperrbolzen ansteuerndes Teil
- 5: Sperrbolzen
- 6: Sicherheitseinrichtung
- 7: Längsachse
- 8,8': Abzugssicherungsblech
- 9: Sperrstift
- 10: Feder
- 11: Ausnehmung
- 12: Durchmesser (erste Teil des Sperrstiftes)
- 13: erste Teil (Sperrstift)
- 14: erste Ende (Abzugssicherungsblech)
- 15: Schließzylindervorderseite
- 16,16': zweite, nasenförmige Ende (Abzugssicherungsblech)
- 17: zweite Teil (Sperrstift)
- 18: Durchmesser (zweite Teil des Sperrstiftes)
- 19,19': Abdeckplatte
- 20,20': Abkröpfung
- 21,21': Ausnehmung
- 22,22': nutenförmige Ausnehmung
- 23: Seitenwand

- 80,80': Sollbruchstelle
- 190: Montageöffnung
- 200: Ende (Gehäuse)
- 201,201': Führungsnut

## Patentansprüche

1. Kraftfahrzeug-Lenkradschloß mit einem Gehäuse (2,2') und einem von einem Schlüssel betätigbaren Schließzylinder (3,3'), der auf einen Sperrbolzen (5) zum Blockieren der Lenkradsäule einwirkt, derart, daß bei abgezogenem Schlüssel der Sperrbolzen (5) in eine entsprechende Ausnehmung der Lenkradsäule zur Erreichung eines Sperrposition eingreift wobei
a) das Gehäuse (2,2') eine Montageöffnung (190) besitzt, die durch eine an dem Gehäuse (2,2') befestigbare Abdeckplatte (19,19') geschützt ist;
b) die Abdeckplatte (19,19') mit einer Abkröpfung (20,20') versehen ist, die eine in Richtung der Längsachse (7) des Schließzylinders (3) sich erstreckende Ausnehmung (21,21') enthält;
c) ein in Richtung der Längsachse (7) des Schließzylinders (3,3') sich erstreckendes stegförmiges Abzugssicherungsblech (8,8') mit einem ersten (14) und einem zweiten (16) Ende, dessen zweites Ende (16) durch die Ausnehmung (21,21') der Abkröpfung (20, 20') ragt,
d) sich mit seinem zwischen Abkröpfung (20,20') und schließzylinderseitigen Ende (200) des Gehäuses (2,2') befindlichen Bereich in einer Führungsnut (201,201') des Gehäuses (2,2') abstützt; und
e) das Abzugssicherungsblech (8,8') und die Abdeckplatte (19,19') im Bereich der Ausnehmung (21,21') der Abkröpfung (20,20') derart zueinander angeordnet sind, daß das Abzugssicherungsblech (8,8') bei an dem Gehäuse (2,2') befestigter Abdeckplatte (19,19') nicht aus der Ausnehmung (21,21') der Abkröpfung (20,20') herausziehbar ist.

2. Kraftfahrzeug-Lenkradschloß nach Anspruch 1, **dadurch gekennzeichnet, daß** das Abzugssicherungsblech (8,8') im Bereich der Ausnehmung (21,21') der Abkröpfung (20,20') eine nutenförmige Ausnehmung (22,22') enthält, die länger ist als die Länge der Ausnehmung (21,21') der Abkröpfung (20,20'), und daß die dem zweiten Ende (16) des Abzugssicherungsbleches (8,8') zugewandte Seitenwand (23) der nutenförmigen Ausnehmung (22,22') in bezug auf die Ausnehmung (21,21') der Abkröpfung (20,20') eine Hinterschneidung bildet.

3. Kraftfahrzeug-Lenkradschloß nach Anspruch 2, **dadurch gekennzeichnet, daß** die Breite der Ausnehmung (21,21') der Abkröpfung (20,20') der Breite des Abzugssicherungsbleches (8,8') im Bereich der nutenförmigen Ausnehmung (22,22') entspricht.

4. Kraftfahrzeug-Lenkradschloß nach einem der Ansprüche 1 bis 3, **dadurch gekennzeichnet, daß** sich das erste Ende (14) des Abzugssicherungsbleches (8,8') bis zur Schließzylindervorderseite (15) erstreckt, und daß das Abzugssicherungsblech (8,8') in dem Bereich zwischen der Abkröpfung (20,20') und seinem ersten Ende (14) eine Sollbruchstelle (80,80') aufweist.

5. Kraftfahrzeug-Lenkradschloß nach Anspruch 4, **dadurch gekennzeichnet, daß** die Sollbruchstelle (80,80') des Abzugssicherungsbleches (8,8') im Bereich zwischen der Abkröpfung (20,20') und dem schließzylinderseitigen Ende (200) des Gehäuses (2,2') angeordnet ist.

6. Kraftfahrzeug-Lenkradschloß nach einem der Ansprüche 1 bis 5, **dadurch gekennzeichnet, daß** im Bereich des zweiten Endes (16) des Abzugssicherungsbleches (8) ein Sperrstift (9) angeordnet ist, daß das zweite Ende (16) des Abzugssicherungsbleches (8) den Sperrstift (9) blockiert, derart, daß der Sperrstift (9) bei unzerstörtem Abzugssicherungsblech (8) gegen den Druck einer Feder (10) in seiner entsperrten Stellung gehalten wird, und daß der Sperrstift (9) freigegeben wird und in eine Ausnehmung (11) des Sperrbolzens (5) oder eines den Sperrbolzen (5) ansteuernden Teiles (4) in der Sperrposition eingreift und dieses blockiert, wenn das Abzugssicherungsblech (8) durch Herausreißen, Verdrehen o.dgl. bricht oder die Abdeckplatte (19) angehoben wird.

7. Kraftfahrzeug-Lenkradschloß nach Anspruch 6, **dadurch gekennzeichnet, daß** der Sperrstift (9) zweiteilig als abgesetzter Zylinder ausgebildet ist, wobei der erste Teil (13) des Zylinders mit dem kleineren Durchmesser (12) in die Ausnehmung (11) des Sperrbolzens (5) eingreifbar angeordnet ist, daß das zweite Ende (16) des Abzugssicherungsbleches (8) nasenförmig ausgebildet ist, derart, daß in der entsperrten Stellung des Sperrstiftes (9) der zweite Teil (17) des Sperrstiftes (9) an dem nasenförmigen Ende (16) anliegt und ein Verschieben des Sperrstiftes (9) in die Ausnehmung (11) des Sperrbolzens (5) verhindert.

## Claims

1. A motor vehicle steering lock having a housing (2, 2') and a lock cylinder (3, 3') actuatable by a key, which lock cylinder (3, 3') acts on a locking bolt (5) for blocking the steering column, in such a way that, when the key is withdrawn, the locking bolt (5) engages in a corresponding recess in the steering column to achieve a locking position, wherein
a) the housing (2, 2') comprises a mounting opening (190), which is protected by a cover plate (19, 19') attachable to the housing (2, 2');
b) the cover plate (19, 19') is provided with a portion (20, 20') bent at a right angle thereto, which contains a recess (21, 21') extending in the direction of the longitudinal axis (7) of the lock cylinder (3) ;
c) a web-type anti-withdrawal plate (8, 8') extending in the direction of the longitudinal axis (7) of the lock cylinder (3, 3') and having a first and second end (14 and 16 respectively), the second end (16) of which projects through the recess (21, 21') in the right-angled portion (20, 20'),
d) rests with its area located between right-angled portion (20, 20') and lock cylinder-side end (200) of the housing (2, 2') in a guide channel (201, 201') in the housing (2, 2'); and
e) the anti-withdrawal plate (8, 8') and the cover plate (19, 19') are arranged in the area of the recess (21, 21') in the right-angled portion (20, 20') in such a way relative to one another that the anti-withdrawal plate (8, 8') cannot be retracted from the recess (21, 21') in the right-angled portion (20, 20') when the cover plate (19, 19') is attached to the housing (2, 2').

2. A motor vehicle steering lock according to claim 1, **characterised in that** the anti-withdrawal plate (8, 8') contains a groove-shaped recess (22, 22') in the area of the recess (21, 21') in the right-angled portion (20, 20'), which recess (22, 22') is longer than the length of the recess (21, 21') in the right-angled portion (20, 20'), and **in that** the side wall (23) of the groove-shaped recess (22, 22') facing the second end (16) of the anti-withdrawal plate (8, 8') forms an undercut in relation to the recess (21, 21') in the right-angled portion (20, 20').

3. A motor vehicle steering lock according to claim 2, **characterised in that** the width of the recess (21, 21') in the right-angled portion (20, 20') corresponds to the width of the anti-withdrawal plate (8, 8') in the area of the groove-shaped recess (22, 22').

4. A motor vehicle steering lock according to one of claims 1 to 3, **characterised in that** the first end (14) of the anti-withdrawal plate (8, 8') extends as far as the front (15) of the lock cylinder and **in that** the anti-withdrawal plate (8, 8') comprises a predetermined breaking point (80, 80') in the area between the right-angled portion (20, 20') and its first end (14).

5. A motor vehicle steering lock according to claim 4, **characterised in that** the predetermined breaking point (80, 80') of the anti-withdrawal plate (8, 8') is arranged in the area between the right-angled portion (20, 20') and the lock cylinder-side end (200) of the housing (2, 2').

6. A motor vehicle steering lock according to one of claims 1 to 5, **characterised in that** a locking pin (9) is arranged in the area of the second end (16) of the anti-withdrawal plate (8), **in that** the second end (16) of the anti-withdrawal plate (8) blocks the locking pin (9) in such a way that the locking pin (9) is held in its unlocked position against the pressure of a spring (10) when the anti-withdrawal plate (8) is in the undestroyed state, and **in that** the locking pin (9) is released and engages in the locking position in a recess (11) of the locking bolt (5) or an element (4) actuating the locking bolt (5) and blocks it, if the anti-withdrawal plate (8) breaks due to wrenching, twisting or the like or the cover plate (19) is lifted.

7. A motor vehicle steering lock according to claim 6, **characterised in that** the locking pin (9) is constructed in two parts as a stepped cylinder, wherein the first part (13) of the cylinder with the smaller diameter (12) is arranged so as to be capable of engaging in the recess (11) of the locking bolt (5), **in that** the second end (16) of the anti-withdrawal plate (8) is of lug-type construction, in such a way that, when the locking pin is in the unlocked position, the second part (17) of the locking pin (9) rests against the lug-type end (16) and prevents displacement of the locking pin (9) into the recess (11) of the locking bolt (5).

## Revendications

1. Antivol sur la direction d'un véhicule à moteur, comprenant un boîtier (2, 2') et un cylindre de fermeture (3, 3') actionnable par une clé, qui agit sur un boulon de blocage (5) pour bloquer la colonne de direction, de telle sorte que lorsque la clé est retirée, le boulon de blocage (5) vienne en prise dans un évidement correspondant de la colonne de direction pour obtenir une position de blocage, où
a) le boîtier (2, 2') possède une ouverture de montage (190) qui est protégée par une plaque de recouvrement (19, 19') pouvant être fixée sur le boîtier (2, 2') ;
b) la plaque de recouvrement (19, 19') est pourvue d'une partie coudée (20, 20') qui contient un évidement (21, 21') s'étendant dans la direction de l'axe longitudinal (7) du cylindre de fermeture (3) ;
c) une tôle de protection contre le retrait (8, 8') en forme d'ailette s'étendant dans la direction de l'axe longitudinal (7) du cylindre de fermeture (3, 3'), avec une première (14) et une deuxième (16) extrémité, dont la deuxième extrémité (16) fait saillie à travers l'évidement (21, 21') de la partie coudée (20, 20'),
d) s'appuie avec sa partie se trouvant entre la partie coudée (20, 20') et l'extrémité (200) du boîtier (2, 2') du côté du cylindre de fermeture, dans une rainure de guidage (201, 201') du boîtier (2, 2') ; et
e) la tôle de protection contre le retrait (8, 8') et la plaque de recouvrement (19, 19') sont disposées l'une par rapport à l'autre dans la région de l'évidement (21, 21') de la partie coudée (20, 20'), de telle sorte que la tôle de protection contre le retrait (8, 8'), lorsque la plaque de recouvrement (19, 19') est fixée sur le boîtier (2, 2'), ne puisse pas être retirée hors de l'évidement (21, 21') de la partie coudée (20, 20').

2. Antivol sur la direction d'un véhicule à moteur selon la revendication 1, **caractérisé en ce que** la tôle de protection contre le retrait (8, 8') comprend, dans la région de l'évidement (21, 21') de la partie coudée (20, 20'), un évidement en forme de rainure (22, 22'), qui est plus long que la longueur de l'évidement (21, 21') de la partie coudée (20, 20') et **en ce que** la paroi latérale (23) de l'évidement en forme de rainure (22, 22') tournée vers la deuxième extrémité (16) de la tôle de protection contre le retrait (8, 8') forme une contre-dépouille par rapport à l'évidement (21, 21') de la partie coudée (20, 20').

3. Antivol sur la direction d'un véhicule à moteur selon la revendication 2, **caractérisé en ce que** la largeur de l'évidement (21, 21') de la partie coudée (20, 20') correspond à la largeur de la tôle de protection contre le retrait (8, 8') dans la région de l'évidement (22, 22') en forme de rainure.

4. Antivol sur la direction d'un véhicule à moteur selon l'une quelconque des revendications 1 à 3, **caractérisé en ce que** la première extrémité (14) de la tôle de protection contre le retrait (8, 8') s'étend jusqu'à la face avant (15) du cylindre de fermeture, et **en ce que** la tôle de protection contre le retrait (8, 8') présente, dans la région entre la partie coudée (20, 20') et sa première extrémité (14), une zone de points destinés à la rupture (80, 80').

5. Antivol sur la direction d'un véhicule à moteur selon la revendication 4, **caractérisé en ce que** la zone de points destinés à la rupture (80, 80') de la tôle de protection contre le retrait (8, 8') est disposée dans la région entre la partie coudée (20, 20') et l'extrémité (200) du boîtier (2, 2') du côté du cylindre de fermeture.

6. Antivol sur la direction d'un véhicule à moteur selon l'une quelconque des revendications 1 à 5, **caractérisé en ce que** dans la région de la deuxième extrémité (16) de la tôle de protection contre le retrait (8) est disposée une tige de blocage (9), **en ce que** la deuxième extrémité (16) de la tôle de protection contre le retrait (8) bloque la tige de blocage (9) de telle sorte que la tige de blocage (9) soit maintenue dans sa position déverrouillée contre la pression d'un ressort (10) si la tôle de protection contre le retrait (8) n'est pas détruite, et **en ce que** la tige de blocage (9) est libérée et vient en prise dans la position de blocage dans un évidement (11) du boulon de blocage (5) ou d'une pièce (4) commandant le boulon de blocage (5) et bloque ce dernier, lorsque la tôle de protection contre le retrait (8) se casse sous l'effet d'un arrachage, d'une torsion ou similaire, ou que la plaque de recouvrement (19) est soulevée.

7. Antivol sur la direction d'un véhicule à moteur selon la revendication 6, **caractérisé en ce que** la tige de blocage (9) est conçue en deux parties sous la forme d'un cylindre étagé, la première partie (13) du cylindre avec le plus petit diamètre (12) étant disposée de manière à pouvoir venir en prise dans l'évidement (11) du boulon de blocage (5), **en ce que** la deuxième extrémité (16) de la tôle de protection contre le retrait (8) est conçue en forme de nez, de telle sorte que dans la position déverrouillée de la tige de blocage (9), la deuxième partie (17) de la tige de blocage (9) repose contre l'extrémité en forme de nez (16) et empêche un déplacement de la tige de blocage (9) dans l'évidement (11) du boulon de blocage (5).
